# EUROPEAN PATENT SPECIFICATION

(11) **EP 1 198 531 B1**
(45) Date of publication and mention of the grant of the patent: **24.01.2007**
(21) Application number: 00943366.5
(22) Date of filing: 30.06.2000
(51) Int. Cl.: C09J 5/00

(54) **SHEET-ADHESION DEVICE**
VORRICHTUNG FÜR DAS AUFKLEBEN VON SCHICHTEN
DISPOSITIF DE COLLAGE DE FEUILLE

(30) Priority: 19.07.1999 JP 20496399
(43) Date of publication of application: 24.04.2002
(73) Proprietor: 3M Innovative Properties Company, St. Paul, MN 55133-3427 (US)
(72) Inventor: SHIOZAWA, Takayuki, Saint Paul, MN 55133-3427 (US)
(74) Representative: Vossius & Partner
(86) International application number: PCT/US2000/018239
(87) International publication number: WO 2001/005902

(56) References cited:
- EP-A- 0 932 149
- WO-A-99/17327
- DE-C- 19 606 395
- US-A- 5 106 450

## Description

The present invention relates to a sheet-adhesion device.

Nowadays, a coloring of a car body has mostly been carried out by a painting technology. The coloring according to the painting technology, however, has an inconvenience in that the painting operation must be carried out while preventing the sags and runs of a paint from occurring. Also, the painting operation is liable to cause the unevenness in color.

To solve the above-mentioned drawbacks, there has recently been a trial in that sheets, each having a desired color, are adhered to a car body to color the same. According to such an adhesion technology, it is possible to overcome the above-mentioned problems in the painting technology; i.e., the inconvenience due to the sags and runs as well as the difficulty accompanied with the liability of color unevenness.

Conventionally, an adhesive sheet or film is manually adhered to an object, using a squeegee. In this manner, an adhesive sheet is positioned on the object in position and adhere to the object in such a manner that the puckering of the adhesive sheet and the involvement of the air between the adhesive sheet and the object are avoided. When the puckering of the adhesive sheet or the involvement of the air occurs, the puckering portion or the air involved portion is moved and eliminated by pressing and moving the squeegee, and thereby the adhesive sheet is completely adhere to the object. The removal of air from beneath the adhesive sheet is difficult to accomplish. Further, when a large adhesive sheet is adhered to the object, it is difficult for one person to position the adhesive sheet on the object in a predetermined position, and adhere the sheet to the object. Even if a plurality of persons adhere the adhesive sheet to object, there is a possibility that the portion of the sheet other than that to be adhered, is adhered to a portion of the object other than the desirable portion to be adhered. Therefore, it becomes difficult to adhere the adhesive sheet to the object, and the puckering of the adhesive sheet and the formation of pockets easily occurs. In particular, this is true in the case that the object has a curved profile, or flat and curved profiles. In this case, the positioning and adhesion processes over the curved profiles cause the puckering of the adhesive sheet and the formation of air pockets.

DE 196 06 395 C 1 relates to a method and device for applying a film onto a surface, e.g. a painted surface of a car, wherein the film is provided in a supply reel from which it is pulled off. The film is supplied and put onto the surface to be covered, wherein the film is cut before, during or after supplying and putting it onto the surface to be covered so that the edge of the surface to be covered protrudes at least slightly over the contour of the cut film and the rest of the film is removed before, during or after the film is put onto the surface to be covered.

The disclosure of document DE-C-19606 395 covers the preamble features of claim 1.

It would be an advantage to provide a sheet-adhesion device which can overcome the above-mentioned problems, and which can adhere precisely an adhesive sheet on an object in a predetermined position in a uniform and desired manner without the puckering of the sheet and the formation of air pockets.

To solve the above-mentioned problems, according to a first aspect of the present invention, a sheet-adhesion device as recited in the claims for adhering an adhesive sheet to an object is provided, comprising a tensioning device for holding an adhesive sheet under tension adjacent to an object, and an applicator for pressing the tensioned adhesive sheet against the object, whereby the tensioned adhesive sheet is adhered to the object. According to this aspect, the adhesive sheet is pressed onto the object while being maintained under tension. The tensioning device is able to adjust the tension. The invention also relates to a method for applying an adhesive sheet onto an object as recited in claim 7.

The applicator has a pressing surface made of an elastic material.

According to a preferred embodiment, the applicator is moved at a direction along the longitudinal direction of the adhesive sheet.

According to another embodiment, the applicator is reciprocated along the longitudinal direction of the adhesive sheet.

Preferably, the applicator comprises at least one roller having a surface which is conformable with the profile of the object when the roller presses the adhesive sheet to the object.

Advantageously, the applicator comprises a plurality of rollers, each of rollers has a surface which is conformable with different profiles of the object when the roller presses the adhesive sheet to the object.

The invention will be more fully appreciated with reference to the following drawings in which similar reference numerals designate like or analogous components throughout and in which:
Figs. 1-6 are schematic views of a sheet-adhesion device according to the present invention;
Fig. 7 is a perspective view of a cylindrical roller suitable for use with the present invention;
Fig. 8 is a perspective view of a conical frustum roller suitable for use with the present invention;
Fig. 9 is a sectional view taken along a datum 9 in Fig. 3;
Fig. 10 is a sectional view taken along datum 10 in Fig. 6; and
Fig. 11 is a partial cross-sectional view of an adhesive sheet suitable for use with the present invention.

A sheet-adhesion device according to the present invention will be described in more detail below with reference to the attached drawings. First, a structure of the sheet-adhesion device will be explained and then the operation thereof will be explained.

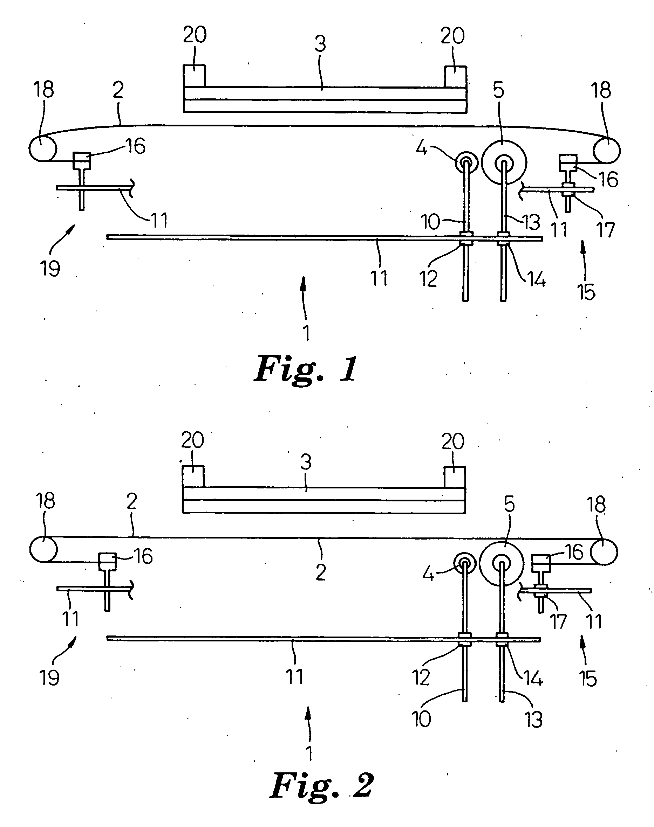

With reference to Fig. 1, reference numeral 1 generally denotes a sheet-adhesion device according to the present invention; 2 a sheet to be adhered (hereinafter referring to as an "adhesive sheet"); and 3 an object on which the adhesive sheet is adhered (hereinafter referred to as an "object"). In this embodiment, the object 3 is a car body and is hold by the holding means or device 20, and the adhesive sheet 2 is that for coloring the car body.

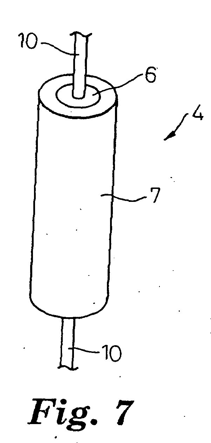

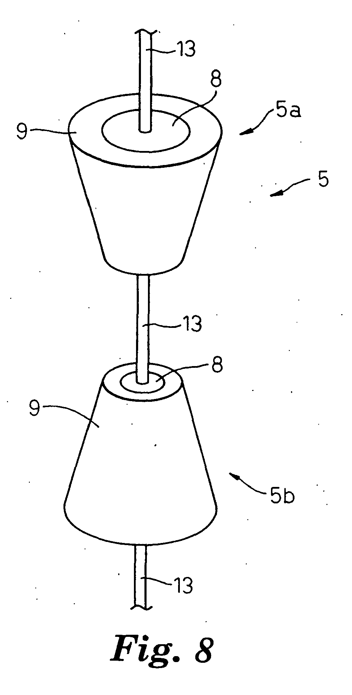

The sheet-adhesion device 1 comprises an applicator for adhering the adhesive sheet 2. The applicator of the invention can include conventional elements in various forms such as, for example, a roller or a squeegee. Preferably, the sheet-adhesion device 1 is provided with two rollers 4 and 5. The one roller 4 in these rollers is a generally cylindrical roller as shown in Fig. 7 (hereinafter referred to as a "cylindrical roller"). The other roller 5 consists of a pair of generally conical frustum roller elements 5a and 5b arranged opposite to each other as shown in Fig. 8 (the roller being hereinafter referred to as a "conical frustum roller).

As indicated in Fig. 7, the cylindrical roller 4 is formed of a metallic core 6 covered with an elastically deformable layer 7 made of an elastic material such as polyurethane, Thereby, an elastically deformable pressing surface is provided to the cylindrical roller 4. As indicated in Fig. 8, each of the conical frustum roller elements 5a and 5b is formed of a metallic core 8 covered with an elastically deformable layer 9 made of an elastic material such as polyurethane. Thereby, an elastically deformable pressing surface is provided to the conical frustum roller 5.

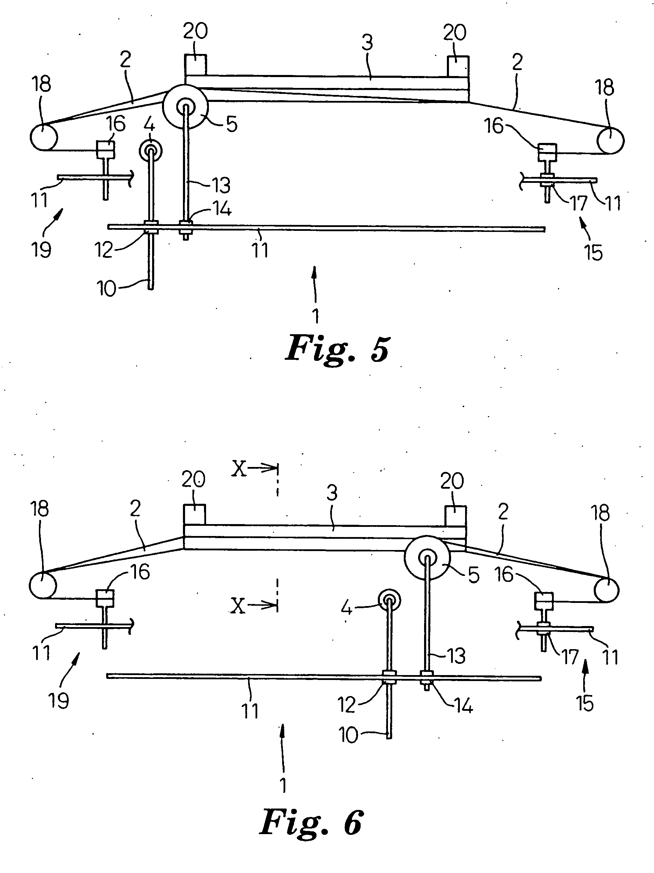

The following description generally refers to Figs. 1-6, unless otherwise noted. The cylindrical roller 4 is coupled to a main frame 11 via a sub-frame 10. The sub-frame 10 is, in turn, coupled to the main frame 11 via an actuator 12. The actuator 12 causes the cylindrical roller 4 to be movable along the main frame 11 and also to be movable in the vertical direction relative to the main frame 11.

The conical frustum roller 5 is coupled to the main frame 11 via a sub-frame 13, The sub-frame 13 is, in turn, coupled to the main frame 11 via an actuator 14. The actuator 14 causes the conical frustum roller 5 to be movable along the main frame 11 and also to be movable in the vertical direction relative to the main frame 11.

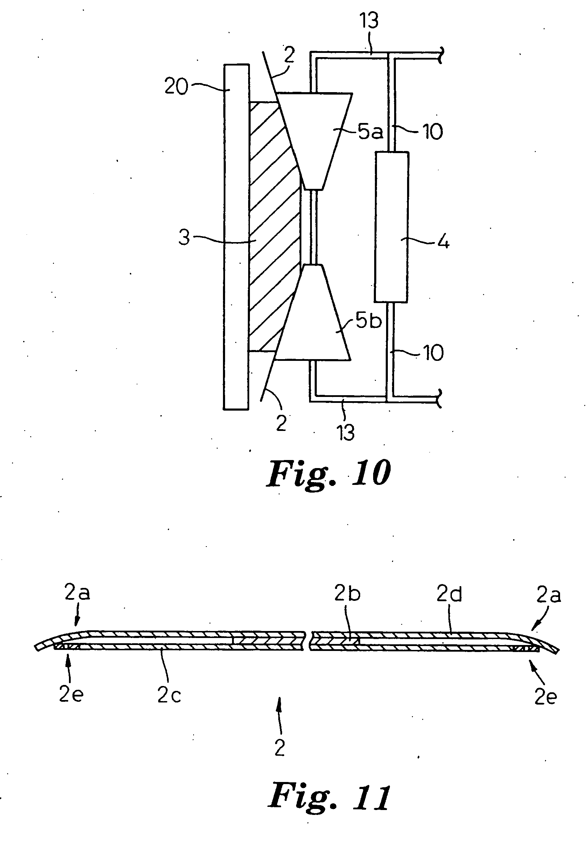

On the other hand, the sheet-adhesion device 1 is also provided with sheet-holding/stretching devices 15, 19 for stretching the adhesive sheet 2 to be adhered while holding the latter under a predetermined tension. Each of the sheet-holding/stretching devices 15, 19 has a holder 16 as means for holding each of opposite ends 2a of the adhesive sheet 2. The holder 16 could include, for example, conventional mechanical clamping devices or adhesives for securing a portion of an application tape 2c as described below in more detail so as to allow the application tape 2c to be tensioned. The holder 16 of the device 15 is coupled to the main frame 11 via an actuator 17. The actuator 17 causes the holder 16 to be movable along the main frame 11. In this regard, as shown in Fig. 11, the adhesive sheet 2 consists of an adhesive film 2b to be adhered to the object 3, and an application tape 2c for supporting the adhesive film 2b. The adhesive backed film 2b is an adhesive backed article with suitable adhesives and film backings. For example, a suitable adhesive backed film is PU-2957 which is available from Sumitomo 3M Company in Japan. Further, a suitable application tape is, for example, SCT2010J which is available from Sumitomo 3M Company in Japan. As shown in Fig. 11, an optional release liner 2d or paper can be releasably bonded to the adhesive of the adhesive backed film to protect the adhesive backed film. The release liner 2d is then removed prior to application of the adhesive sheet to the object. For example, a suitable release liner is JIMT106 which is available from Sumitomo 3M Company in Japan. A plurality of apertures 2e are provided in the respective end portion 2a of the application tape 2c. The holder 16 is capable of holding the application tape 2c of the adhesive sheet 2 by inserting pins (not shown) provided thereon into the apertures 2e. Further, the application tape 2c is a support for supporting the adhesive film 2b in order to adhere precisely the adhesive film 2b to the object 3 in a desired position while maintaining the relation between the adhesive film and the object. In addition, the substrate of the application tape 2c is made of a material which has much flexibility and elasticity than that of the adhesive backed film.

Further, each of the sheet-holding/stretching devices 15, 19 is provided with a holding roller 18 arranged adjacent to the respective holder 16. The holding roller 18 has a sufficient size for winding the adhesive sheet 2 around the same.

A basic principle of the present invention will be briefly explained prior to describing the operation of the sheet-adhesion device according to the present invention in detail.

As described above, the object of the present invention is to easily adhere the adhesive sheet at a desired position on the object in a uniform and desired manner while avoiding the air involvement between adhesive sheet and the object. To achieve this object, the present invention mainly has the following two characteristics:

First of the characteristics is to maintain the adhesive sheet under a predetermined tension during the adhesion of the adhesive sheet onto the object. This is achieved by the sheet-holding/stretching devices 15, 19. Since the air involvement between the adhesive sheet and the object is mainly originated from the slack of the adhesive sheet during the adhering operation, it is possible to prevent air from being involved between the adhesive sheet and the object, by adhering the adhesive sheet onto the object by means of the roller while maintaining the adhesive sheet under the tension.

Second of the characteristics is to adhere the adhesive sheet onto the object while using a plurality of rollers having different profiles. This is achieved by the cylindrical roller 4 and the conical frustum roller 5. Generally speaking, there is a rare case wherein an overall profile of the object is flat and plain, but in most cases, the profile is rather curved, or contoured. The air involvement between the adhesive sheet and the object is mainly caused by the difficulty of conforming the adhesive sheet with the curved profile of the object. According to the present invention, however, the profile of the object is divided into a plurality of surface sections, each being considered as generally flat and curved sections, and a plurality of rollers, each having a flat surface corresponding to the respective surface section, are used for the adhering operation. Thereby, it is possible to prevent air from being involved between the adhesive sheet and the object by the use of these rollers:

As described above, the positioned adhesive sheet is adhered to the object by first pressing the generally central region of the object by means of the cylindrical roller, while the air is moved from the central region to the longitudinal edges of the adhesive sheet. Next, the region of the both longitudinal edges of the object is pressed and adhered by the conical frustum roller to move the air out of the adhesive sheet.

Next, the operation of the sheet-adhesion device 1 will be described in more detail with reference to the attached drawings. First, as shown in Fig. 1, the adhesive sheet 2 is attached at its one end to the holder 16 of the device 19 while being partly wound around the holding rollers 18 of the device 19 and at its other end to the holder 16 of the device 15 while being partially wound around the holding rollers 18 of the device 15. In this stage, the adhesive sheet 2 is not in a stretched state. Then, as shown in Fig. 2, the actuator 17 operates to move the right side holder 16 in a longitudinal direction of the adhesive sheet 2 along the main frame 11 to be closer to the left side holder 16. Thus, the adhesive sheet 2 is opposed to the object 3 under the predetermined tension. In this regard, the release liner 2d has been released from the adhesive sheet 2 prior to this state.

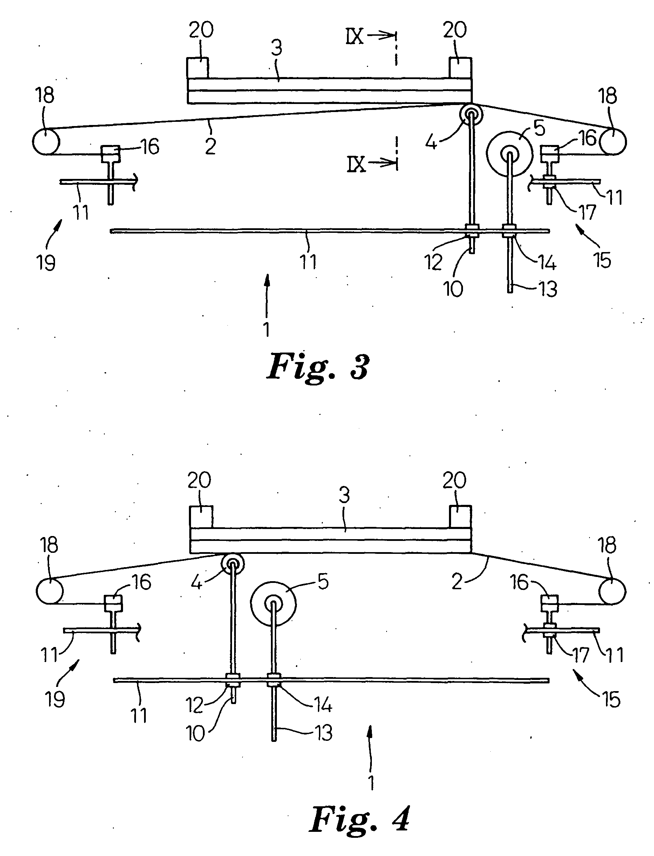

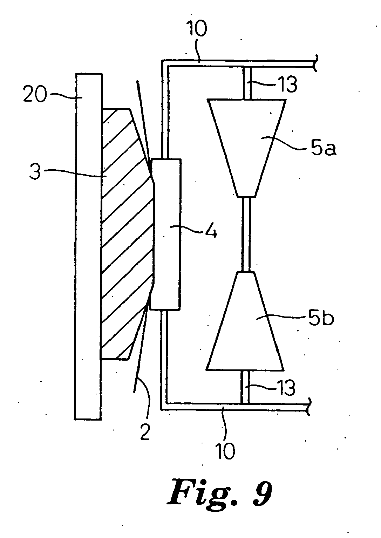

Thereafter, as shown in Fig. 3, the actuator 12 operates to move the cylindrical roller 4 toward the object 3 in the vertical direction relative to the main frame 11 and force the cylindrical roller 4 against the object 3 while interposing the adhesive sheet between the roller 4 and the object 3. In other words, the cylindrical roller 4 corresponds to an applicator for positively pressing the adhesive sheet 2 against the object 3. At that time, as shown in Fig. 9, the cylindrical roller 4 is pressed against generally a central area of the object 3. The surface of the cylindrical roller 4 is elastically deformed to conform with the profile of the object 3.

As shown in Fig. 4, the actuator 12 operates to move the cylindrical roller 4 in the longitudinal direction of the adhesive sheet 2 along the main frame 11 while pressing the cylindrical roller 4 against the object 3. Thus, the adhesive sheet 2 is adhered to the central area of the object 3.

Then, as shown in Fig, 5, the actuator 12 operates to move the cylindrical roller 4 away from the object 3 in the vertical direction relative to the main frame 11. Simultaneously therewith, the actuator 14 operates to move the conical frustum roller 5 toward the object 3 in the vertical direction relative to the main frame 11 so that the conical frustum roller 5 is pressed against the object 3 while interposing the adhesive sheet 2 between the both. In other words, the conical frustum roller 5 corresponds to an applicator for positively pressing the adhesive sheet 2 against the object 3. At that time, the conical frustum roller 5 is being pressed against areas on the opposite sides of the central area of the object 3, as shown in Fig. 10. The surface of the conical frustum roller 5 is also elastically deformed to conform with the profile of the object 3.

Thereafter, as shown in Fig, 6. the actuator 14 operates to move the conical frustum roller 5 in the longitudinal direction of the adhesive sheet 2 along the main frame 11 while pressing the conical frustum roller 5 against the object 3. Thus, the adhesive sheet 2 is adhered to the areas on the opposite sides of the central area of the object 3.

Finally, although not illustrated, the actuator 14 operates to move the conical frustum roller 5 away from the object 3 in the vertical direction relative to the main frame 11. The application tape 2c of the adhesive sheet 2 is removed from the holders 16 and is peeled off from the adhesive film 2b. Thus, the sheet-adhering operation is completed and the device is ready for the next adhering operation.

Further, the cylindrical roller 4 and the conical frustum roller 5 which is located behind the roller 4 may be simultaneously moved and pressed to the object via the adhesive sheet in order to adhere the adhesive sheet to the object.

As described above, according to the present invention, it is possible to adhere the adhesive sheet through the above-mentioned processes without involving, or entrapping, air between the adhesive sheet and the object.

Although a plurality of rollers are employed in the above embodiment, it does not limit the invention.

Thus, according to the present invention, the adhesive sheet is pressed against the object while maintaining a stretched state: That is, there is no slack in the adhesive sheet during the adhering operation. Thereby, it is possible to adhere the adhesive sheet to the object without the air involvement between the adhesive sheet and the object.

## Claims

1. A sheet-adhesion device (1) for adhering an adhesive sheet (2) to an object (3), comprising a tensioning device (15, 19) for holding an adhesive sheet (2) under tension adjacent to an object (3), and at least one applicator (4, 5) for pressing the tensioned adhesive sheet against the object, whereby the tensioned adhesive sheet is adhered to the object, **characterized in that** the adhesive sheet (2) comprises an application tape (2c) supporting an adhesive film (2b) to be adhered to the object (3), wherein said tensioning device (15, 19) is able to adjust the tension in the application tape (2c), said at least one applicator (4, 5) being movable so as to positively press the application tape (2c) and the supported adhesive film (2b) toward the object (3) so as to adhere the adhesive film (2b) to the object (3), said at least one applicator (4, 5) having a pressing surface made of an elastic material (7, 9), and after the adhesive film (2b) is adhered to the object (3), the application tape (2c) is removable from the adhesive film (2b) without removing the adhesive film (2b) from the object.

2. A sheet-adhesion device as defined by claim 1, further comprising at least one actuator (12, 14) capable of causing said at least one applicator (4, 5) to be movable relative to the application tape (2c).

3. A sheet-adhesion device as defined by claim 1 or 2, wherein the at least one applicator (4, 5) is movable in a first direction along the longitudinal direction of the application tape (2c), a second direction opposite the first direction, and a vertical direction relative to said tensioning device (15, 19).

4. A sheet-adhesion device as defined by any one of claims 1 to 3, wherein the at least one applicator (4, 5) comprises at least one roller having a surface which is conformable with the profile of the object (3) when the roller presses the application tape (2c) to the object.

5. A sheet-adhesion device as defined by any one of claims 1 to 4, wherein the at least one applicator (4, 5) comprises a plurality of rollers (4, 5), wherein each of said rollers has a surface corresponding to a respective surface section of the object (3) when the roller presses the application tape (2c) to the object.

6. An adhesive sheet (2) suitable for use with the device according to any one of claims 1 to 5, said adhesive sheet (2) comprising an application tape (2c) supporting an adhesive film (2b) such that, after the adhesive film (2b) is adhered to an object (3), the application tape (2c) is removable from the adhesive film (2b) without removing the adhesive film (2b) from the object.

7. A method for applying an adhesive film (2b) onto an object (3), comprising pressing an application tape (2c) supporting an adhesive film (2b) against an object utilizing the device (1) of any one of claims 1 to 5.

8. A method for applying an adhesive film (2b) onto a car body, comprising:
(a) holding an application tape (2c) supporting the adhesive film (2b) under tension near the car body suitable for receiving the adhesive film (2b); and
(b) pressing the application tape (2c) against the car body with one or more applicators (4, 5) to bond the adhesive film (2b), supported by the application tape (2c), to the car body without the entrapment of air between the adhesive film (2b) and the car body.

9. A method as defined by claim 8, wherein the adhesive film (2b) is suitable as a replacement for conventional paint:

10. A method as defined by claim 8 or 9, further comprising:
(c) removing the application tape (2c) from the adhesive film (2b) adhered to the car body.

## Patentansprüche

1. Bahnklebevorrichtung (1) zum Kleben einer Klebebahn (2) an ein Objekt (3), mit einer Spannvorrichtung (15, 19) zum Halten einer Klebebahn (2) unter Spannung benachbart zu einem Objekt (3) und mindestens einem Applikator (4, 5) zum Drücken der gespannten Klebebahn gegen das Objekt, wodurch die gespannte Klebebahn an das Objekt geklebt wird, **dadurch gekennzeichnet, dass** die Klebebahn (2) ein Applikationsband (2c) aufweist, das eine Klebeschicht (2b) stützt, die an das Objekt (3) geklebt werden soll, wobei die Spannvorrichtung (15, 19) dazu fähig ist, die Spannung in dem Applikationsband (2c) einzustellen, wobei der mindestens eine Applikator (4, 5) beweglich ist, um das Applikationsband (2c) und die gestützte Klebeschicht (2b) formschlüssig an das Objekt (3) zu drücken, um die Klebeschicht (2b) an das Objekt (3) zu kleben, wobei der mindestens eine Applikator (4, 5) eine Andrückfläche aufweist, die aus einem elastischen Material (7, 9) gefertigt ist, und wobei das Applikationsband (2c) nach dem Kleben der Klebeschicht (2b) an das Objekt (3) von der Klebeschicht (2b) entfernt werden kann, ohne die Klebeschicht (2b) von dem Objekt zu entfernen.

2. Bahnklebevorrichtung nach Anspruch 1, die ferner mindestens einen Auslöser (12, 14) aufweist, der bewirken kann, dass der mindestens eine Applikator (4, 5) bezüglich des Applikationsbandes (2c) beweglich ist.

3. Bahnklebevorrichtung nach Anspruch 1 oder 2, wobei der mindestens eine Applikator (4, 5) entlang der Längsrichtung des Applikationsbandes (2c) in eine erste Richtung, in eine zweite Richtung, die der ersten Richtung entgegengesetzt ist, und in eine bezüglich der Spannvorrichtung (15, 19) vertikale Richtung bewegt werden kann.

4. Bahnklebevorrichtung nach einem der Ansprüche 1 bis 3, wobei der mindestens eine Applikator (4, 5) mindestens eine Walze aufweist, die eine Fläche aufweist, die an das Profil des Objekts (3) anpassbar ist, wenn die Walze das Applikationsband (2c) an das Objekt drückt.

5. Bahnklebevorrichtung nach einem der Ansprüche 1 bis 4, wobei der mindestens eine Applikator (4, 5) mehrere Walzen (4, 5) aufweist, wobei jede der Walzen eine Fläche aufweist, die einem jeweiligen Flächenabschnitt des Objekts (3) entspricht, wenn die Walze das Applikationsband (2c) an das Objekt drückt.

6. Klebebahn (2), die zur Benutzung mit der Vorrichtung nach einem der Ansprüche 1 bis 5 geeignet ist, wobei die Klebebahn (2) ein Applikationsband (2c) aufweist, das eine Klebeschicht (2b) derart stützt, dass das Applikationsband (2c) nach dem Kleben der Klebeschicht (2b) an das Objekt (3) von der Klebeschicht (2b) entfernt werden kann, ohne die Klebeschicht (2b) von dem Objekt zu entfernen.

7. Verfahren zum Aufbringen einer Klebeschicht (2b) auf ein Objekt (3), welches das Drücken eines Applikationsbandes (2c), das eine Klebeschicht (2b) stützt, gegen ein Objekt unter Benutzung der Vorrichtung (1) nach einem der Ansprüche 1 bis 5 aufweist.

8. Verfahren zum Aufbringen einer Klebeschicht (2b) auf eine Autokarosserie, mit Folgendem:
(a) Halten eines Applikationsbandes (2c), welches die Klebeschicht (2b) stützt, unter Spannung in der Nähe der Autokarosserie, die zur Aufnahme der Klebeschicht (2b) geeignet ist; und
(b) Drücken des Applikationsbandes (2c) gegen die Autokarosserie mit einem oder mehreren Applikatoren (4, 5), um die Klebeschicht (2b), die von dem Applikationsband (2c) gestützt wird, ohne Lufteinschluss zwischen der Klebeschicht (2b) und der Autokarosserie an die Autokarosserie zu binden.

9. Verfahren nach Anspruch 8, wobei die Klebeschicht (2b) als Ersatz für herkömmlichen Lack geeignet ist.

10. Verfahren nach Anspruch 8 oder 9, das ferner Folgendes aufweist:
(c) Entfernen des Applikationsbandes (2c) von der Klebeschicht (2b), die an der Autokarosserie klebt.

## Revendications

1. Dispositif de collage de feuille (1) pour le collage d'une feuille adhésive (2) sur un objet (3), comprenant un dispositif de tension (15, 19) pour maintenir une feuille adhésive (2) sous tension de façon adjacente à un objet (3), et au moins un applicateur (4, 5) pour presser la feuille adhésive sous tension contre l'objet, la feuille adhésive sous tension étant ainsi collée sur l'objet, **caractérisé en ce que** la feuille adhésive (2) comprend une bande d'application (2c) portant un film adhésif (2b) à coller sur l'objet (3), dans lequel ledit dispositif de tension (15, 19) est capable d'ajuster la tension dans la bande d'application (2c), ledit au moins un applicateur (4, 5) pouvant être déplacé de façon à presser positivement la bande d'application (2c) et le film adhésif supporté (2b) vers l'objet (3) de façon à coller le film adhésif (2b) sur l'objet (3), ledit au moins un applicateur (4, 5) comportant une surface de pression qui se compose d'un matériau élastique (7, 9), et après le collage du film adhésif (2b) sur l'objet (3), on peut retirer la bande d'application (2c) du film adhésif (2b) sans retirer le film adhésif (2b) de l'objet.

2. Dispositif de collage de feuille selon la revendication 1, comprenant en outre au moins un actionneur (12, 14) capable d'entraîner le déplacement dudit au moins un applicateur (4, 5) par rapport à la bande d'application (2c).

3. Dispositif de collage de feuille selon la revendication 1 ou 2, dans lequel le au moins un applicateur (4, 5) peut être déplacé dans un premier sens le long de la direction longitudinale de la bande d'application (2c), dans un deuxième sens opposé au premier sens, et dans une direction verticale par rapport audit dispositif de tension (15, 19).

4. Dispositif de collage de feuille selon l'une quelconque des revendications 1 à 3, dans lequel le au moins un applicateur (4, 5) comprend au moins un rouleau comportant une surface capable de s'adapter au profil de l'objet (3) quand le rouleau presse la bande d'application (2c) contre l'objet.

5. Dispositif de collage de feuille selon l'une quelconque des revendications 1 à 4, dans lequel le au moins un applicateur (4, 5) comprend une pluralité de rouleaux (4, 5), chacun desdits rouleaux comportant une surface correspondant à une section de surface respective de l'objet (3) quand le rouleau presse la bande d'application (2c) contre l'objet.

6. Feuille adhésive (2) convenant à une utilisation avec le dispositif selon l'une quelconque des revendications 1 à 5, ladite feuille adhésive (2) comprenant une bande d'application (2c) portant un film adhésif (2b) de sorte que, après le collage du film adhésif (2b) sur un objet (3), on puisse retirer la bande d'application (2c) du film adhésif (2b) sans retirer le film adhésif (2b) de l'objet.

7. Méthode d'application d'un film adhésif (2b) sur un objet (3), comprenant la pression d'une bande d'application (2c) portant un film adhésif (2b) contre un objet en utilisant le dispositif (1) selon l'une quelconque des revendications 1 à 5.

8. Méthode d'application d'un film adhésif (2b) sur une carrosserie automobile, comprenant :
(a) le maintien sous tension d'une bande d'application (2c) portant le film adhésif (2b) près de la carrosserie automobile convenant à la pose du film adhésif (2b) ; et
(b) la pression de la bande d'application (2c) contre la carrosserie automobile avec un ou plusieurs applicateurs (4, 5) pour coller le film adhésif (2b), supporté par la bande d'application (2c), sur la carrosserie automobile sans piéger d'air entre le film adhésif (2b) et la carrosserie automobile.

9. Méthode selon la revendication 8, dans laquelle le film adhésif (2b) peut être utilisé à la place d'une peinture conventionnelle.

10. Méthode selon la revendication 8 ou 9, comprenant en outre :
(c) le retrait de la bande d'application (2c) du film adhésif (2b) collé sur la carrosserie automobile.
